# EUROPEAN PATENT APPLICATION

(11) **EP 4 131 070 A1**
(43) Date of publication of application: **08.02.2023**
(21) Application number: 22176453.3
(22) Date of filing: 31.05.2022
(51) Int. Cl.: G06K 9/62, G06V 10/44, G06V 10/46, G06V 10/75, G06V 10/74, G06V 10/764, G06V 10/82, G06V 20/62, G06V 20/70

(54) **METHOD AND APPARATUS FOR IDENTIFYING DISPLAY SCENE, DEVICE AND STORAGE MEDIUM**

(30) Priority: 03.08.2021 CN 202110886915
(71) Applicant: Beijing Baidu Netcom Science and Technology Co., Ltd., Beijing 100085 (CN)
(72) Inventor: CHEN, Kehua, Beijing, 100085 (CN); NI, Zihan, Beijing, 100085 (CN); AN, Rongqiao, Beijing, 100085 (CN); SUN, Yipeng, Beijing, 100085 (CN); CHEN, Yuerong, Beijing, 100085 (CN); YAO, Kun, Beijing, 100085 (CN)
(74) Representative: Gill Jennings & Every LLP

(57) **Abstract**

A method and apparatus for identifying a display scene, a method and apparatus for training a model, a device, a storage medium and a computer program product are provided. A specific implementation comprises: acquiring a feature vector of a to-be-identified image and acquiring a base library feature vector set; ascertaining, from the base library feature vector set, at least two candidate feature vectors based on a similarity coefficient between the feature vector of the to-be-identified image and each feature vector in the base library feature vector set; performing threshold comparisons on similarity coefficients of the at least two candidate feature vectors, to obtain a target feature vector; and determining a display scene of the to-be-identified image based on a display scene tag corresponding to the target feature vector.

## Description

### TECHNICAL FIELD

The present invention relates to the field of artificial intelligence technology and particularly to the fields of computer vision and deep learning technologies, can be applied to scenarios such as an image processing scenario and an image recognition scenario, and more particularly to a method and apparatus for identifying a display scene, a method and apparatus for training a model, a device, a storage medium and a computer program product.

### BACKGROUND

At present, during the recognition for a display scene, the display scene is usually recognized according to the global feature and at least one local feature of a to-be-detected image. However, this method needs to maintain a large number of images, resulting in high annotation costs.

### SUMMARY

Embodiments of the present invention provides a method and apparatus for identifying a display scene, a method and apparatus for training a model, a device, a storage medium and a computer program product, thereby improving the scene identification efficiency.

According to a first aspect of the present invention, a method for identifying a display scene is provided. The method includes: acquiring a feature vector of a to-be-identified image and acquiring a base library feature vector set; ascertaining, from the base library feature vector set, at least two candidate feature vectors based on a similarity coefficient between the feature vector of the to-be-identified image and each feature vector in the base library feature vector set; performing threshold comparisons on similarity coefficients of the at least two candidate feature vectors, to obtain a target feature vector; and determining a display scene of the to-be-identified image based on a display scene tag corresponding to the target feature vector.

According to another aspect of the present invention, a method for training a model is provided. The method includes: collecting a set of image samples of display scenes; performing target area extraction on each image sample in the set of image samples, to obtain a set of target area samples; and using the set of target area samples as training samples to train a first initial model, to obtain a feature extraction model.

According to another aspect of the present invention, an apparatus for identifying a display scene is provided. The apparatus includes: an acquiring module, configured to acquire a feature vector of a to-be-identified image and acquire a base library feature vector set; an ascertaining module, configured to ascertain, from the base library feature vector set, at least two candidate feature vectors based on a similarity coefficient between the feature vector of the to-be-identified image and each feature vector in the base library feature vector set; a determining module, configured to perform threshold comparisons on similarity coefficients of the at least two candidate feature vectors, to obtain a target feature vector; and an identification module, configured to determine a display scene of the to-be-identified image based on a display scene tag corresponding to the target feature vector.

According to another aspect of the present invention, an apparatus for training a model is provided, The apparatus includes: a collecting module, configured to collect a set of image samples of display scenes; an extracting module, configured to perform target area extraction on each image sample in the set of image samples, to obtain a set of target area samples; and a first training module, configured to use the set of target area samples as training samples to train a first initial model, to obtain a feature extraction model.

According to another aspect of the present invention, an electronic device is provided. The electronic device includes: at least one processor; and a storage device, communicated with the at least one processor, where the storage device stores instructions executable by the at least one processor, the instructions, when executed by the at least one processor, cause the at least one processor to perform the above methods for identifying a display scene and methods for training model.

According to another aspect of the present invention, a non-transitory computer readable storage medium is provided. The non-transitory computer readable storage medium stores a computer instruction thereon, where the computer instruction, when performed by a computer, cause the computer to perform the above methods for identifying a display scene and methods for training model.

According to another aspect of the present invention, a computer program product is provided. The computer program product comprises a computer program, where the computer program, when executed by a processor, cause the processor to implement the above methods computer program product.

It should be understood that the content described in this part is not intended to identify key or important features of embodiments of the present invention, and is not used to limit the scope of the present invention. Other features of the present invention will be easily understood through the following description.

### BRIEF DESCRIPTION OF THE DRAWINGS

The accompanying drawings are used for a better understanding of the scheme, and do not constitute a limitation to the present invention. Here:
Fig. 1 is a diagram of an example system architecture in which embodiments of the present invention may be applied;
Fig. 2 is a flowchart of a method for identifying a display scene according to an embodiment of the present invention;
Fig. 3 is a flowchart of the method for identifying a display scene according to another embodiment of the present invention;
Fig. 4 is a flowchart of the method for identifying a display scene according to another embodiment of the present invention;
Fig. 5 is a flowchart of the method for identifying a display scene according to another embodiment of the present invention;
Fig. 6 is a flowchart of the method for identifying a display scene according to another embodiment of the present invention;
Fig. 7 is a flowchart of a method for training a model according to an embodiment of the present invention;
Fig. 8 is a flowchart of the method for training a model according to another embodiment of the present invention;
Fig. 9 is a flowchart of the method for training a model according to another embodiment of the present invention;
Fig. 10 is a schematic structure diagram of an apparatus for identifying a display scene according to an embodiment of the present invention;
Fig. 11 is a schematic structure diagram of an apparatus for training a model according to an embodiment of the present invention; and
Fig. 12 is a block diagram of an electronic device used to implement the method for identifying a display scene or the method for training a model according to embodiments of the present invention.

### DETAILED DESCRIPTION OF EMBODIMENTS

Example embodiments of the present invention are described below in combination with the accompanying drawings, and various details of embodiments of the present invention are included in the description to facilitate understanding, and should be considered as examples only. Accordingly, it should be recognized by one of ordinary skill in the art that various changes and modifications may be made to embodiments described herein without departing from the scope of the present invention. Also, for clarity and conciseness, descriptions for well-known functions and structures are omitted in the following description.

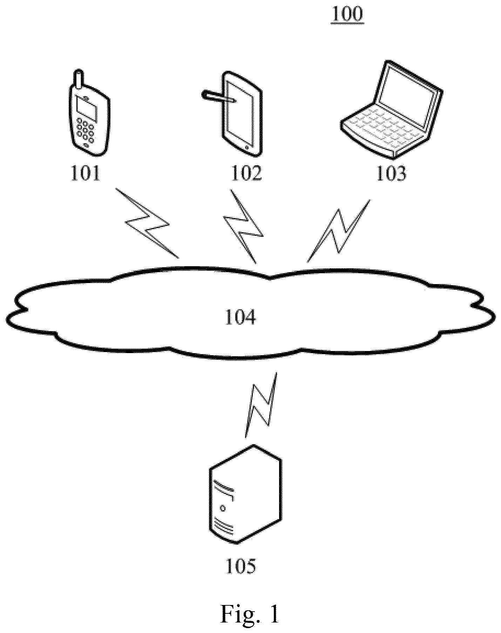

Fig. 1 illustrates an example system architecture 100 in which a method for identifying a display scene, a method for training a model, an apparatus for identifying a display scene or an apparatus for training a model according to embodiments of the present invention may be applied.

As shown in Fig. 1, the system architecture 100 may include terminal device(s) 101, 102, 103, a network 104 and a server 105. The network 104 serves as a medium providing a communication link between the terminal device(s) 101, 102, 103 and the server 105. The network 104 may include various types of connections, for example, wired or wireless communication links, or optical fiber cables.

A user may use the terminal device(s) 101, 102, 103 to interact with the server 105 via the network 104, to acquire a display scene of a to-be-identified image, etc. Various client applications (e.g., an image processing application) may be installed on the terminal device(s) 101, 102, 103.

The terminal device(s) 101, 102, 103 may be hardware or software. When being the hardware, the terminal device(s) 101, 102, 103 may be various electronic devices, the electronic devices including, but not limited to, a smartphone, a tablet computer, a laptop portable computer, a desktop computer, and the like. When being the software, the terminal device(s) 101, 102, 103 may be installed in the above listed electronic devices. The terminal device(s) 101, 102, 103 may be implemented as a plurality of pieces of software or a plurality of software modules, or may be implemented as a single piece of software or a single software module, which will not be specifically limited here.

The server 105 may provide various display scene identification based services. For example, the server 105 may analyze and process a to-be-identified image acquired from the terminal device(s) 101, 102, 103, and generate a processing result (e.g., acquire the display scene of the to-be-identified image).

It should be noted that the server 105 may be hardware or software. When being the hardware, the server 105 may be implemented as a distributed server cluster composed of a plurality of servers, or may be implemented as a single server. When being the software, the server 105 may be implemented as a plurality of pieces of software or a plurality of software modules (e.g., software or software modules for providing a distributed service), or may be implemented as a single piece of software or a single software module, which will not be specifically limited here.

It should be noted that the method for identifying a display scene or the method for training a model provided in embodiments of the present invention is generally performed by the server 105. Correspondingly, the apparatus for identifying a display scene or the apparatus for training a model is generally provided in the server 105.

It should be appreciated that the numbers of the terminal devices, the networks and the servers in Fig. 1 are merely illustrative. Any number of terminal devices, networks and servers may be provided based on actual requirements.

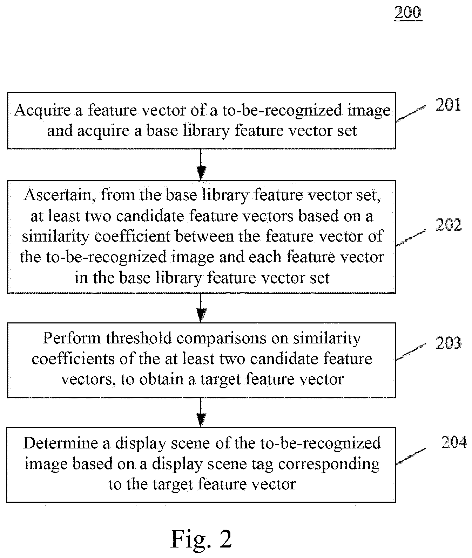

Further referring to Fig. 2, Fig. 2 illustrates a flow 200 of a method for identifying a display scene according to an embodiment of the present invention. The method for identifying a display scene includes the following steps:

Step 201, acquiring a feature vector of a to-be-identified image and acquiring a base library feature vector set.

In this embodiment, an executing body (e.g., the server 105 shown in Fig. 1) of the method for identifying a display scene may acquire the feature vector of the to-be-identified image and acquire the base library feature vector set. Here, the to-be-identified image is an image containing a display scene, and the display scene may refer to a piece of display equipment containing a commodity category name. The display equipment may refer to a common goods shelf, an upright refrigerator display, a chest refrigerator display, a GE (Gondola end), a cold air cabinet display, an island display, a floor display, a display shelf, a display rack, a hot beverage machine, or the like, and the commodity category name may refer to cola, beer, or the like, which is not limited in embodiments of the present invention. The to-be-identified image may be collected using various photographing devices (e.g., a mobile phone or a digital camera), or may be captured from a video (e.g., captured from a surveillance video), which is not limited in embodiments of the present invention. The to-be-identified image may include at least one integral display scene, and the to-be-identified image is required to be clear and distinguishable. A base library is a pre-stored image library, which contains images of various display scenes.

In this embodiment, the feature vector is a vector, which is affiliated to an image. An image may have different attributes, and the different attributes are represented by different attribute values, and a plurality of attribute values are put together and then represented by a vector, and the vector is called a feature vector. A feature vector set is a set of a plurality of feature vectors. In this embodiment, the feature vector of the to-be-identified image and the base library feature vector set are obtained through a feature extraction model. The feature vector of the to-be-identified image may be obtained by inputting the to-be-identified image into the feature extraction model. The feature vector of each base library image may be obtained by respectively inputting the base library images of various display scenes that are already stored in the base library into the feature extraction model, and the set constituted by the feature vectors of the base library images is the base library feature vector set.

Step 202, ascertaining, from the base library feature vector set, at least two candidate feature vectors based on a similarity coefficient between the feature vector of the to-be-identified image and each feature vector in the base library feature vector set.

In this embodiment, the above executing body may ascertain at least two candidate feature vectors from the base library feature vector set based on the similarity coefficient between the feature vector of the to-be-identified image and the each feature vector in the base library feature vector set. Here, a similarity coefficient represents a degree of similarity between the to-be-identified image and an image in the base library, and is obtained by performing a calculation on the feature vector of the to-be-identified image and a feature vector of the image in the base library feature vector set. The numerical value of the similarity coefficient is in the range of 0 to 1. The larger the similarity coefficient is, the higher the degree of similarity is. A candidate feature vector is a feature vector selected from the base library feature vector set. Generally, at least two feature vectors are selected from the base library feature vector set according to a descending order of similarity coefficients from high to low, to be used as the candidate feature vectors.

Step 203, performing threshold comparisons on similarity coefficients of the at least two candidate feature vectors, to obtain a target feature vector.

In this embodiment, after ascertaining at least two candidate feature vectors, the above executing body may perform the threshold comparisons on the similarity coefficients of the at least two candidate feature vectors to obtain the target feature vector. The similarity coefficients of the at least two candidate feature vectors are compared with a threshold, and a feature vector is selected from the at least two candidate feature vectors according to a preset determination rule, and the selected feature vector is used as the target feature vector. Here, the threshold is obtained experimentally, and the numerical value of the threshold is in the range of 0 to 1. For example, the similarity coefficients of the at least two candidate feature vectors are compared with a preset threshold, and a feature vector of which the similarity coefficient is the largest among candidate feature vectors of which the similarity coefficients are greater than the threshold is taken as the target feature vector.

Step 204, determining a display scene of the to-be-identified image based on a display scene tag corresponding to the target feature vector.

In this embodiment, after obtaining the target feature vector, the above executing body may identify the display scene of the to-be-identified image based on the display scene tag corresponding to the target feature vector. Here, the display scene tag corresponding to the target feature vector is stored in advance, and thus may be directly read. The display scene tag represents the category of a piece of display equipment containing a commodity category name, and the display equipment containing the commodity category name is already described in detail in step 201, and thus will not be repeatedly described here. Since the target feature vector is selected according to the similarity coefficient, the image corresponding to the target feature vector is a similar image of the to-be-identified image, and thus, the display scene tag corresponding to the target feature vector is determined as the display scene of the to-be-identified image.

According to the method for identifying a display scene provided in embodiments of the present invention, first, the feature vector of the to-be-identified image is acquired and the base library feature vector set is acquired. Then, at least two candidate feature vectors are ascertained from the base library feature vector set based on the similarity coefficient between the feature vector of the to-be-identified image and the each feature vector in the base library feature vector set. Next, threshold comparisons are performed on the similarity coefficients of the at least two candidate feature vectors to obtain the target feature vector. Finally, the display scene of the to-be-identified image is determined based on the display scene tag corresponding to the target feature vector. The display scene is identified by performing the threshold comparisons on the similarity coefficients of the candidate feature vectors, thus improving the identification efficiency.

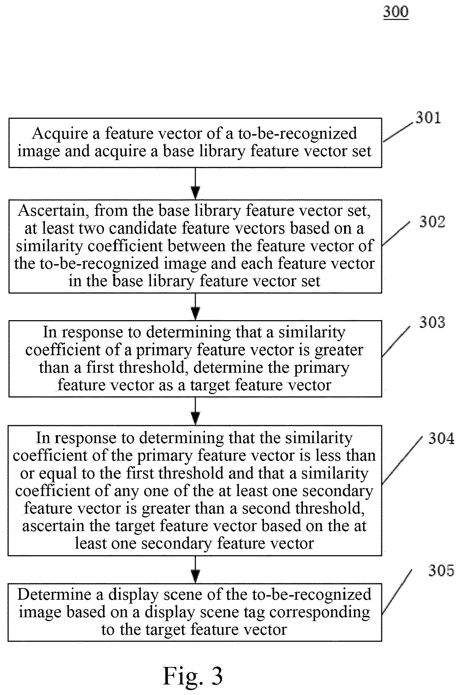

Further referring to Fig. 3, Fig. 3 illustrates a flow 300 of a method for identifying a display scene according to another embodiment of the present invention. The method for identifying a display scene includes the following steps:

Step 301, acquiring a feature vector of a to-be-identified image and acquiring a base library feature vector set.

Step 302, ascertaining, from the base library feature vector set, at least two candidate feature vectors based on a similarity coefficient between the feature vector of the to-be-identified image and each feature vector in the base library feature vector set.

In this embodiment, the operations of steps 301-302 are described in detail in steps 201-202 in the embodiment shown in Fig. 2, and thus will not be repeatedly described here.

In this embodiment, the at least two candidate feature vectors ascertained by the above executing body include one primary feature vector and at least one secondary feature vector. Here, by comparing similarity coefficients, the at least two candidate feature vectors are divided into the one primary feature vector and the at least one secondary feature vector.

In some alternative implementations of this embodiment, the similarity coefficient of the primary feature vector is greater than the similarity coefficient of any one of the at least one secondary feature vector. The similarity coefficients of the at least two candidate feature vectors are sorted in a descending order. The candidate feature vector with the largest similarity coefficient is taken as the primary feature vector, and the remaining candidate feature vector is taken as the at least one secondary feature vector.

Step 303, in response to determining that a similarity coefficient of a primary feature vector is greater than a first threshold, determining the primary feature vector as a target feature vector.

In this embodiment, the value of the first threshold is obtained experimentally. Clear display scene images are collected as a test set, and each image contains at least one integral display scene. Experiments are performed on the test set based on the feature extraction model, and the numerical value with the best clustering effect is taken as the first threshold. The value of the first threshold is in the range of 0 to 1, for example, the first threshold is 0.68. However, the first threshold is not a fixed value, and the value of the first threshold changes dynamically according to the iteration of the feature extraction model.

In this embodiment, when the similarity coefficient of the primary feature vector is greater than the first threshold, the primary feature vector is determined as the target feature vector.

Step 304, in response to determining that the similarity coefficient of the primary feature vector is less than or equal to the first threshold and that a similarity coefficient of any one of the at least one secondary feature vector is greater than a second threshold, ascertaining the target feature vector based on the at least one secondary feature vector.

In this embodiment, the value of the second threshold is obtained experimentally. Same as the process of acquiring the first threshold, the second threshold is obtained by performing experiments on the test set based on the feature extraction model. The value of the second threshold is in the range of 0 to 1. Here, both the first threshold and the second threshold are numerical values greater than 0 and less than 1, and the second threshold is less than the first threshold. For example, the first threshold is 0.68, and the second threshold is 0.65. The second threshold is not a fixed value, and the value of the second threshold changes dynamically according to the iteration of the feature extraction model.

In this embodiment, when the similarity coefficient of the primary feature vector is less than or equal to the first threshold and the similarity coefficient of the at least one secondary feature vector is greater than the second threshold, one of the at least one secondary feature vector is selected as the target feature vector.

In some alternative implementations of this embodiment, selecting one of the at least one secondary feature vector as the target feature vector may refer to that a secondary feature vector having a largest similarity coefficient in the at least one secondary feature vector is taken as the target feature vector, or that any secondary feature vector in the at least one secondary feature vector is taken as the target feature vector.

Step 305, determining a display scene of the to-be-identified image based on a display scene tag corresponding to the target feature vector.

In this embodiment, the operation of step 305 is described in detail in step 204 in the embodiment shown in Fig. 2, and thus will not be repeatedly described here.

It can be seen from Fig. 3 that, as compared with the embodiment corresponding to Fig. 2, in the method for identifying a display scene in this embodiment, the target feature vector is obtained by comparing the similarity coefficients of the primary feature vector and the at least one secondary feature vector with the first threshold and the second threshold, thus further improving the identification efficiency.

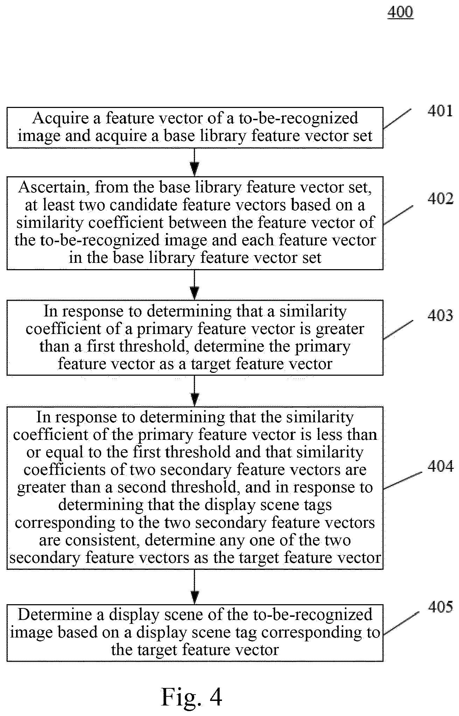

Further referring to Fig. 4, Fig. 4 illustrates a flow 400 of a method for identifying a display scene according to another embodiment of the present invention. The method for identifying a display scene includes the following steps:

Step 401, acquiring a feature vector of a to-be-identified image and acquiring a base library feature vector set.

Step 402, ascertaining three candidate feature vectors from the base library feature vector set based on a similarity coefficient between the feature vector of the to-be-identified image and each feature vector in the base library feature vector set.

In this embodiment, the operations of steps 401-402 are described in detail in steps 201-202 in the embodiment shown in Fig. 2, and thus will not be repeatedly described here.

It should be noted that, in this embodiment, the three candidate feature vectors are ascertained from the base library feature vector set.

In this embodiment, the number of the candidate feature vectors is obtained experimentally. The similarity coefficients between the feature vector of the to-be-identified image and the feature vectors in the base feature vector set are sorted in a descending order from high to low, and it is found that the similarity coefficients decrease rapidly from the fourth similarity coefficient, and therefore, the first three candidate feature vectors are taken in this embodiment.

Step 403, in response to determining that a similarity coefficient of a primary feature vector is greater than a first threshold, determining the primary feature vector as a target feature vector.

In this embodiment, the operation of step 403 is described in detail in step 303 in the embodiment shown in Fig. 3, and thus will not be repeatedly described here.

It should be noted that, in some alternative implementations of this embodiment, the three candidate feature vectors ascertained by the above executing body include one primary feature vector and two secondary feature vectors. The similarity coefficient of the primary feature vector is greater than the similarity coefficient of any one of the two secondary feature vectors.

Step 404, in response to determining that the similarity coefficient of the primary feature vector is less than or equal to the first threshold and that similarity coefficients of two secondary feature vectors are greater than a second threshold, and in response to determining that the display scene tags corresponding to the two secondary feature vectors are consistent, determining any one of the two secondary feature vectors as the target feature vector.

In this embodiment, when determining that the similarity coefficient of the primary feature vector is less than or equal to the first threshold and the similarity coefficients of the two secondary feature vectors are greater than the second threshold, and that the display scene tags corresponding to the two secondary feature vectors are consistent with each other, the above executing body determines any one of the two secondary feature vectors as the target feature vector. Here, a display scene tag represents the category of the display equipment containing a commodity category name, and the display equipment containing the commodity category name is already described in detail in step 201, and thus will not be repeatedly described here. Since the display scene tags corresponding to the two secondary feature vectors are consistent with each other, any one of the secondary feature vectors may be taken as the target feature vector.

Step 405, determining a display scene of the to-be-identified image based on a display scene tag corresponding to the target feature vector.

In this embodiment, the operation of step 405 is described in detail in step 204 in the embodiment shown in Fig. 2, and thus will not be repeatedly described here.

It can be seen from Fig. 4 that, as compared with the embodiment corresponding to Fig. 3, in the method for identifying a display scene in this embodiment, the one primary feature vector and the two secondary feature vectors are selected, and any one of the two secondary feature vectors is ascertained as the target feature vector when the similarity coefficient of the primary feature vector is less than or equal to the first threshold, the similarity coefficients of the two secondary feature vectors are greater than the second threshold and the display scene tags corresponding to the two secondary feature vectors are consistent, which can make the average identification accuracy rate of the display scene tags reach more than 80%, and accordingly, the recognition accuracy rate is obviously improved.

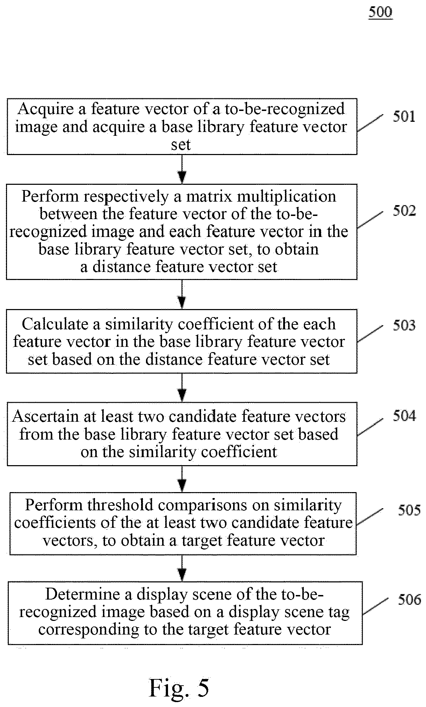

Further referring to Fig. 5, Fig. 5 illustrates a flow 500 of a method for identifying a display scene according to another embodiment of the present invention. The method for identifying a display scene includes the following steps:

Step 501, acquiring a feature vector of a to-be-identified image and acquiring a base library feature vector set.

In this embodiment, the operation of step 501 is described in detail in step 201 in the embodiment shown in Fig. 2, and thus will not be repeatedly described here.

Step 502, performing respectively a matrix multiplication between the feature vector of the to-be-identified image and each feature vector in the base library feature vector set, to obtain a distance feature vector set.

In this embodiment, after acquiring the feature vector of the to-be-identified image and acquiring the base library feature vector set, the above executing body may respectively perform the matrix multiplication between the feature vector of the to-be-identified image and the each feature vector in the base library feature vector set. For example, the feature vector of the to-be-identified image is a 1^{∗}512-dimensional feature vector, each feature vector in the base library feature vector set is a 512^{∗}1-dimensional feature vector, and there are N feature vectors in total in the base library feature vector set, N being a natural number. The 1^{∗}512-dimensional feature vector of the to-be-identified image is respectively multiplied by each 512^{∗}1-dimensional feature vector in the base library feature vector set, thus obtaining N 1^{∗}1-dimensional feature vectors. The 1^{∗}1-dimensional feature vector is called a distance feature vector, and the distance feature vector represents the distance between two feature vectors, such as two feature vectors which are multiplied with each other to obtain the distance feature vector. The numerical value of the distance feature vector is in the range of 0 to 1. N distance feature vectors constitute the distance feature vector set.

Step 503, calculating a similarity coefficient of the each feature vector in the base library feature vector set based on the distance feature vector set.

In this embodiment, after obtaining the distance feature vector set, the above executing body may calculate the similarity coefficient of the each feature vector in the base library feature vector set. Here, the similarity coefficient of the each feature vector in the base library feature vector set is obtained by subtracting a corresponding distance feature vector from 1. The numerical value of the distance feature vector is in the range of 0 to 1, and thus, the numerical value of the similarity coefficient is also in the range of 0 to 1.

Step 504, ascertaining at least two candidate feature vectors from the base library feature vector set based on the similarity coefficient.

In this embodiment, after obtaining the similarity coefficients, the above executing body sorts the similarity coefficients of the feature vectors in the base library feature vector set in a descending order from high to low, and selects, according to the similarity coefficients in the descending order, at least two feature vectors from the base library feature vector set as the at least two candidate feature vectors.

Step 505, performing threshold comparisons on similarity coefficients of the at least two candidate feature vectors to obtain a target feature vector.

Step 506, determining a display scene of the to-be-identified image based on a display scene tag corresponding to the target feature vector.

In this embodiment, the operations of steps 505-506 are described in detail in steps 203-204 in the embodiment shown in Fig. 2, and thus will not be repeatedly described here.

It can be seen from Fig. 5 that, as compared with the embodiment corresponding to Fig. 2, in the method for identifying a display scene in this embodiment, the feature vector of the to-be-identified image and the base library feature vector set are first acquired; the matrix multiplication is then respectively performed between the feature vector of the to-be-identified image and the each feature vector in the base library feature vector set to obtain the distance feature vector set; the similarity coefficient of the each feature vector in the base library feature vector set is calculated based on the distance feature vector set; at least two candidate feature vectors are ascertained from the base library feature vector set based on the similarity coefficient of the each feature vector; and finally, the threshold comparisons are performed on the similarity coefficients of the at least two candidate feature vectors to obtain the target feature vector, and the display scene of the to-be-identified image is determined based on the display scene tag corresponding to the target feature vector. The method of calculating the similarity coefficient by introducing the distance feature vector set is simple and convenient, and thus, the identification efficiency may be further improved.

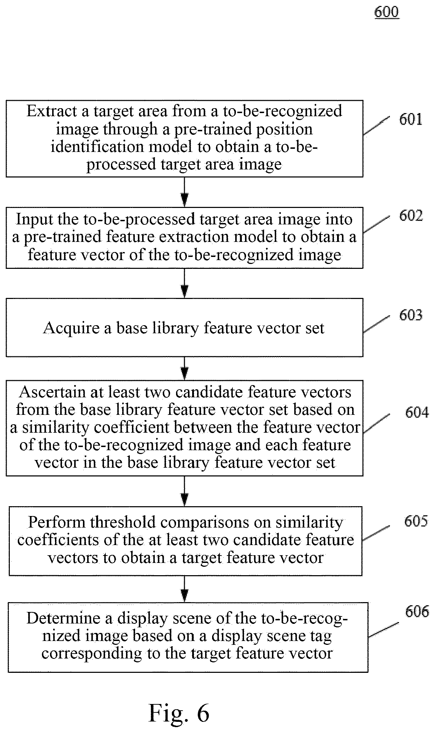

Further referring to Fig. 6, Fig. 6 illustrates a flow 600 of a method for identifying a display scene according to another embodiment of the present invention. The method for identifying a display scene includes the following steps:

Step 601, extracting a target area from a to-be-identified image through a pre-trained position identification model, to obtain a to-be-processed target area image.

In this embodiment, the above executing body extracts the target area from the to-be-identified image through the pre-trained position identification model, to obtain the to-be-processed target area image. Here, the pre-trained position identification model is a model that is capable of identifying the coordinate information of an object in an image, for example, a YOLOv3 model. YOLOv3 is the third version of the YOLO (You Only Look Once) series of object detection algorithms. As compared with previous algorithms, the precision of YOLOv3 is significantly improved, especially for detection of a small object. Image sample set and coordinate information of an object in each image in the image sample set are used as training samples, to train the YOLOv3 model. After the convergence of the YOLOv3 model is arrived, an image is inputted into the YOLOv3 model, and the YOLOv3 model may identify the coordinate information of an object in the image. The coordinate information of an object in the to-be-identified image may be obtained by inputting the to-be-identified image into the pre-trained position identification model. Here, the object may refer to, for example, a display scene. According to the coordinate information of the object, the target area is extracted from the to-be-identified image to obtain the to-be-processed target area image. Here, the target area is the area within the coordinate range of the object in the to-be-identified image. The image within the target area is cropped from the to-be-identified image to obtain the to-be-processed target area image.

Step 602, inputting the to-be-processed target area image into a pre-trained feature extraction model to obtain a feature vector of the to-be-identified image.

In this embodiment, after obtaining the to-be-processed target area image, the above executing body inputs the to-be-processed target area image into the pre-trained feature extraction model to obtain the feature vector of the to-be-identified image. Here, the pre-trained feature extraction model is a model that is capable of extracting a feature vector of an image, for example, a DeiT (Data-efficient image Transformers) model. Transformer is a self-attention mechanism based deep neural network. By improving training and distillation processes, Transformer is applied to image classification, thus obtaining the DeiT model. An image is inputted into the DeiT model, and accordingly, the DeiT model may extract the feature vector of the image. The to-be-processed target area image is inputted into the pre-trained feature extraction model, and thus, the feature vector of the to-be-processed target area image may be obtained. Normalization processing is performed on the feature vector of the to-be-processed target area image, to obtain the feature vector of the to-be-identified image.

Step 603, acquiring a base library feature vector set.

Step 604, ascertaining at least two candidate feature vectors from the base library feature vector set based on a similarity coefficient between the feature vector of the to-be-identified image and each feature vector in the base library feature vector set.

Step 605, performing threshold comparisons on similarity coefficients of the at least two candidate feature vectors to obtain a target feature vector.

Step 606, determining a display scene of the to-be-identified image based on a display scene tag corresponding to the target feature vector.

In this embodiment, the operations of steps 603-606 are described in detail in steps 201-204 in the embodiment shown in Fig. 2, and thus will not be repeatedly described here.

It can be seen from Fig. 6 that, as compared with the embodiment corresponding to Fig. 2, in the method for identifying a display scene in this embodiment, the feature vector of the to-be-identified image is acquired through the pre-trained position identification model and the pre-trained feature extraction model, and the models do not require a large amount of image learning, thereby effectively reducing the amount of calculation and improving the identification efficiency.

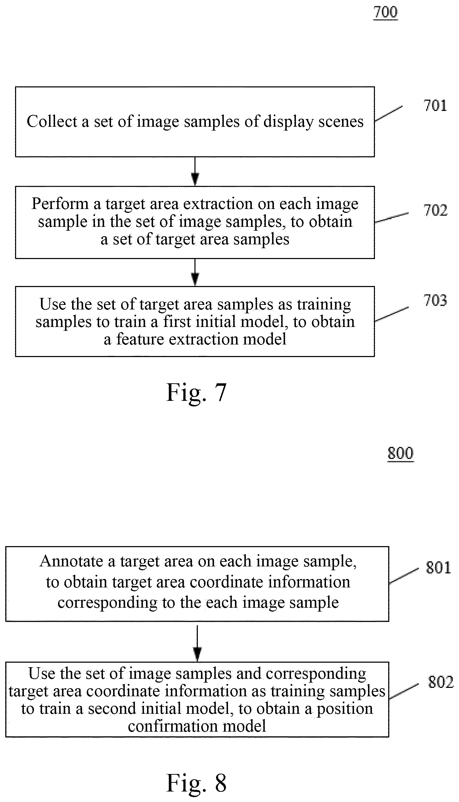

Further referring to Fig. 7, Fig. 7 illustrates a flow 700 of a method for training a model according to an embodiment of the present invention. The method for training a model includes the following steps:

Step 701, collecting a set of image samples of display scenes.

In this embodiment, the model may be applied to the method for identifying a display scene of Figs. 2-6. The above executing body may collect a set of image samples of display scenes. Here, the set of image samples may be collected through various photographing devices (e.g., a mobile phone or a digital camera), or may be captured from a video (e.g., captured from a surveillance video), which is not limited in embodiments of the present invention. Each image containing a display scene is an image sample, and a plurality of image samples constitute the set of image samples.

Step 702, performing a target area extraction on each image sample in the set of image samples, to obtain a set of target area samples.

In this embodiment, after collecting the set of image samples, the above executing body performs target area extraction on each image sample in the set of image samples, to obtain a set of target area samples. Here, the target area extraction is to manually distinguish a position of an object in the each image sample, and crop the image sample according to the position of the object to obtain a target area sample. All the target area samples constitute the set of target area samples. Each target area sample contains only the object itself, and does not contain a background, and thus, the interference of the background can be ruled out.

Step 703, using the set of target area samples as training samples to train a first initial model, to obtain a feature extraction model.

In this embodiment, after obtaining the set of target area samples, the above executing body may use the set of target area samples as training samples to train the first initial model, thus obtaining the feature extraction model. Here, the first initial model is a model that is capable of extracting a feature vector of an image, for example, a DeiT model. The first initial model uses the Self-Attention mechanism, which enables parallel training of the first initial model, and thus has global information. At the same time. The first initial model introduces a distillation procedure, reducing computing resources used by the first initial model, for example, a storage space and a computing unit. The set of target area samples are used as the training samples to train the first initial model, thus obtaining the feature extraction model. Here, when an image is inputted into the feature extraction model, the feature extraction model can accurately extract the feature vector of the image.

As can be seen from Fig. 7, according to the method for training a model in this embodiment, a feature extraction model may be obtained, and parallel training of the feature extraction model can be realized, and the distillation procedure is introduced, and thus a large amount of data is not required for training and a large number of images are not required to be annotated, thereby effectively reducing the annotation cost and improving the identification efficiency.

Further referring to Fig. 8, Fig. 8 illustrates a flow 800 of a method for training a model according to another embodiment of the present invention. The method for training a model includes the following steps:

Step 801, annotating a target area on each image sample in the set of image samples, to obtain target area coordinate information corresponding to the each image sample.

In this embodiment, the above executing body may annotate the target area on the each image sample, to obtain the target area coordinate information corresponding to the each image sample. Here, the operation on the image sample is already described in detail in step 701 in the embodiment shown in Fig. 7 , and thus will not be repeatedly described here.

In this embodiment, the target area annotation is to distinguish manually a position of an object in the each image sample, and ascertain the coordinate information of the object in the image sample based on the position of the object to obtain the target area coordinate information corresponding to the each image sample. Here, the coordinate system corresponding to the coordinate information may be a coordinate system with the lower left corner of the image as the origin, the horizontal direction to the right as the X-axis and the upward vertical direction as the Y-axis.

Step 802, using the set of image samples and corresponding target area coordinate information as training samples to train a second initial model, to obtain a position identification model.

In this embodiment, the executing body uses the set of image samples and the corresponding target area coordinate information as the training samples to train the second initial model, thus obtaining the position identification model. Here, the second initial model is a model that is capable of extracting the position of an object in an image, for example, a YOLOv3 model, which is not limited in embodiments of the present invention. The set of image samples and the corresponding target area coordinate information are used as the training samples to train the second initial model, thus obtaining the position identification model. Here, when an image is inputted into the position identification model, the position identification model can accurately extract the position of the object in the image.

As can be seen from Fig. 8, according to the method for training a model in this embodiment, a position identification model can be obtained, and the position identification model can accurately extract the position of an object in an image, thereby improving the identification efficiency.

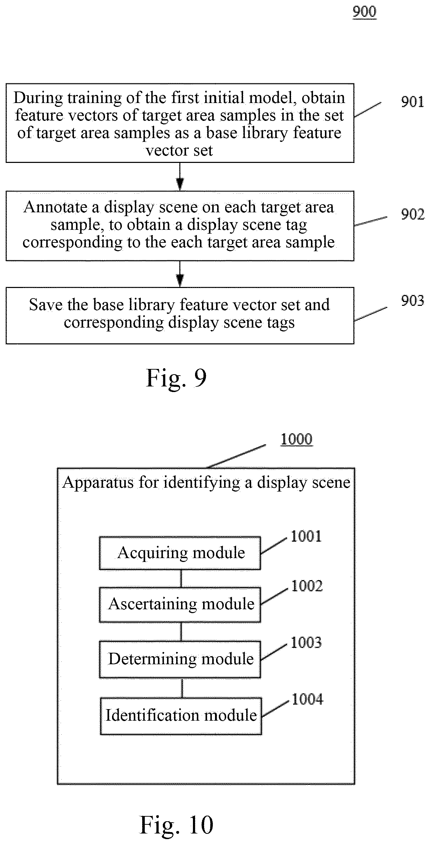

Further referring to Fig. 9, Fig. 9 illustrates a flow 900 of a method for training a model according to another embodiment of the present invention. The method for training a model includes the following steps:

Step 901, during training of a first initial model, obtaining feature vectors of target area samples in a set of target area samples as a base library feature vector set.

In this embodiment, the above executing body uses the set of target area samples as training samples to train the first initial model. After the convergence of the first initial model is reached, the obtained feature extraction model can accurately extract the feature vector of a target area sample. The set of target area samples are inputted into the feature extraction model to obtain the feature vector of the each target area sample in the set of target area samples. The feature vectors of all target area samples constitute the base library feature vector set.

Step 902, annotating a display scene on the each target area sample, to obtain a display scene tag corresponding to the each target area sample.

In this embodiment, the above executing body may annotate a display scene on each target area sample. Here, a display scene refers to a piece of display equipment containing a commodity category name, and the display equipment containing the commodity category name is already described in detail in step 201 in the embodiment shown in Fig. 2, and thus will not be repeatedly described here. The annotating the display scene is to manually determine the category of a display scene in each target area sample, and use the display scene category corresponding to the each target area sample as the display scene tag corresponding to the each target area sample.

Step 903, saving the base library feature vector set and corresponding display scene tags.

In this embodiment, after acquiring the base library feature vector set and the corresponding display scene tags, the above executing body saves the base library feature vector set and the corresponding display scene tags. When there is a new image identification requirement, the saved base library feature vector set and the saved corresponding display scene tags may be directly used without being acquired again.

The storage method may be a database storage method, which is not limited in embodiments of the present invention.

As can be seen from Fig. 9, according to the method for training a model in this embodiment, the base library feature vector set and the corresponding display scene tag can be acquired and saved, and can be repeatedly used when there is a new image identification requirement, thereby further improving the identification efficiency.

Further referring to Fig. 10, as an implementation of the above method for identifying a display scene, an embodiment of the present invention provides an apparatus for identifying a display scene. The embodiment of the apparatus corresponds to the embodiment of the method shown in Fig. 2, and the apparatus may be applied in various electronic devices.

As shown in Fig. 10, the apparatus 1000 for identifying a display scene in this embodiment may include: an acquiring module 1001, an ascertaining module 1002, a determining module 1003 and a identification module 1004. Here, the acquiring module 1001 is configured to acquire a feature vector of a to-be-identified image and acquire a base library feature vector set. The ascertaining module 1002 is configured to ascertain, from the base library feature vector set, at least two candidate feature vectors based on a similarity coefficient between the feature vector of the to-be-identified image and each feature vector in the base library feature vector set. The determining module 1003 is configured to perform threshold comparisons on similarity coefficients of the at least two candidate feature vectors, to obtain a target feature vector. The identifying module 1004 is configured to determine a display scene of the to-be-identified image based on a display scene tag corresponding to the target feature vector.

In this embodiment, for processes of the acquiring module 1001, the ascertaining module 1002, the determining module 1003 and the identifying module 1004 in the apparatus 1000 for identifying a display scene, and their technical effects, reference may be respectively made to relative descriptions of steps 201-204 in the corresponding embodiment of Fig. 2, and thus the specific processes and the technical effects will not be repeatedly described here.

In some alternative implementations of this embodiment, the at least two candidate feature vectors include one primary feature vector and at least one secondary feature vector. The determining module 1003 includes: a first determining submodule, configured to determine, in response to determining that a similarity coefficient of the primary feature vector is greater than a first threshold, the primary feature vector as the target feature vector; and a second determining submodule, configured toascertain, in response to determining that the similarity coefficient of the primary feature vector is less than or equal to the first threshold and that a similarity coefficient of any one of the at least one secondary feature vector is greater than a second threshold, the target feature vector based on the at least one secondary feature vector. Here, both the first threshold and the second threshold are numerical values greater than 0 and less than 1, and the second threshold is less than the first threshold.

In some alternative implementations of this embodiment, the at least two candidate feature vectors include one primary feature vector and two secondary feature vectors. The second determining submodule includes: a tag determining unit, configured to determine, in response to determining that display scene tags corresponding to the two secondary feature vectors are consistent, any one of the two secondary feature vectors as the target feature vector.

In some alternative implementations of this embodiment, the ascertaining module 1002 includes: a matrix-multiplication submodule, configured to perform respectively a matrix multiplication between the feature vector of the to-be-identified image and the each feature vector in the base library feature vector set, to obtain a distance feature vector set; a similarity coefficient calculating submodule, configured to calculate a similarity coefficient of the each feature vector in the base library feature vector set based on the distance feature vector set; and a candidate ascertaining submodule, configured to ascertain, from the base library feature vector set, the at least two candidate feature vectors based on the similarity coefficient.

In some alternative implementations of this embodiment, the similarity coefficient of the primary feature vector is greater than a similarity coefficient of any feature vector in the at least one secondary feature vector.

In some alternative implementations of this embodiment, the acquiring module 1001to-be-identified includes: a target extracting submodule, configured to extract a target area from the to-be-identified image through a pre-trained position identification model, to obtain a to-be-processed target area image; and a target processing submodule, configured to input the to-be-processed target area image into a pre-trained feature extraction model, to obtain the feature vector of the to-be-identified image.

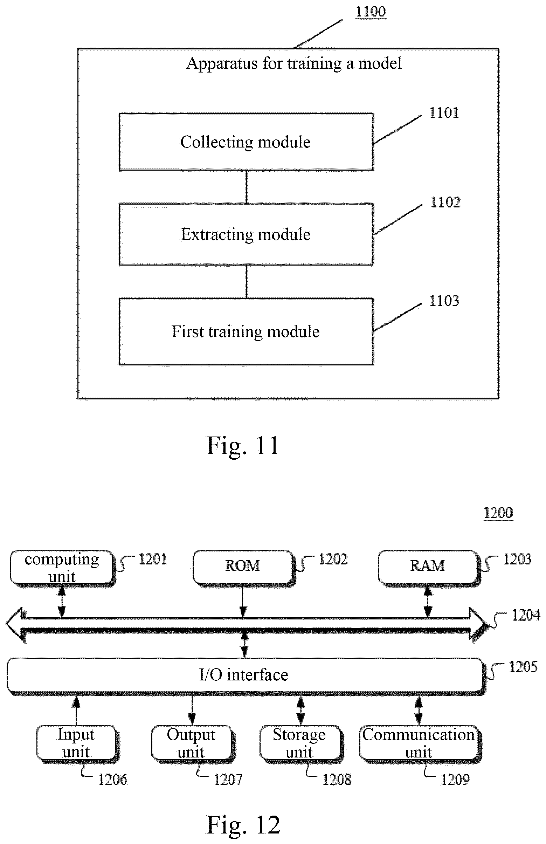

Further referring to Fig. 11, as an implementation of the above method for training a model, an embodiment of the present invention provides an apparatus for training a model. The embodiment of the apparatus corresponds to the embodiment of the method shown in Fig. 7, and the apparatus may be applied in various electronic devices.

As shown in Fig. 11, the apparatus 1100 for training a model in this embodiment may include: a collecting module 1101, an extracting module 1102 and a first training module 1103. Here, the collecting module 1101 is configured to collect a set of image samples of display scenes. The extracting module 1102 is configured to perform target area extraction on each image sample in the set of image samples, to obtain a set of target area samples. The first training module 1103 is configured to use the set of target area samples as training samples to train a first initial model, to obtain a feature extraction model.

In this embodiment, for processes of the collecting module 1101, the extracting module 1102 and the first training module 1103 in the apparatus 1100 for training a model, and their technical effects, reference may be respectively made to relative descriptions of steps 701-703 in the corresponding embodiment of Fig. 7, and thus the specific processes and the technical effects will not be repeatedly described here.

According to some embodiments of the present invention, an electronic device, a readable storage medium and a computer program product are provided.

Fig. 12 is a schematic block diagram of an example electronic device 1200 that may be used to implement embodiments of the present invention. The electronic device is intended to represent various forms of digital computers such as a laptop computer, a desktop computer, a workstation, a personal digital assistant, a server, a blade server, a mainframe computer, and other appropriate computers. The electronic device may alternatively represent various forms of mobile apparatuses such as personal digital processing, a cellular telephone, a smart phone, a wearable device and other similar computing apparatuses. The parts shown herein, their connections and relationships, and their functions are only as examples, and not intended to limit implementations of the present invention as described and/or claimed herein.

As shown in FIG. 12, the device 1200 includes a computing unit 1201, which may perform various appropriate operations and processes based on computer programs stored in a read-only memory (ROM) 1202 or computer programs loaded from a storage unit 1208 to a random access memory (RAM) 1203. The RAM 1203 may also store various programs and data required by the operations of the device 1200. The computing unit 1201, the ROM 1202, and the RAM 1203 are connected to each other by a bus 1204. An input/output (I/O) interface 1205 is also connected to the bus 1204.

A plurality of components in the device 1200 are connected to the I/O interface 1205, including: an input unit 1206, e.g., a keyboard, a mouse, etc.; an output unit 1207, e.g., various types of displays, speakers, etc.; a storage unit 1208, e.g., a magnetic disk, an optical disk, etc.; and a communication unit 1209, e.g., a network card, a modem, a wireless communication transceiver, etc. The communication unit 1209 allows the device 1200 to exchange information/data with other devices over a computer network such as the Internet and/or various telecommunication networks.

The computing unit 1201 may be a variety of general-purpose and/or dedicated processing components with processing and computing capabilities. Some examples of the computing unit 1201 include, but are not limited to, a central processing unit (CPU), a graphics processing unit (GPU), various specialized artificial intelligence (AI) computing chips, various computing units that run machine learning model algorithms, a digital signal processor (DSP), and any suitable processor, controller, microcontroller, etc. The computing unit 1201 executes the various methods and processes described above, such as the methods for identifying a display scene and methods for training a model. For example, in some embodiments, the methods for identifying a display scene and methods for training a model may be implemented as a computer software program that is tangibly contained in a machine readable medium, such as the storage unit 1208. In some embodiments, some or all of the computer program may be loaded and/or installed to the device 1200 via the ROM 1202 and/or the communication unit 1209. When the computer program is loaded to the RAM 1203 and executed by the computing unit 1201, one or more steps of the methods for identifying a display scene and methods for training a model described above may be executed. Alternatively, in other embodiments, the computing unit 1201 may be configured to perform the methods for identifying a display scene and methods for training a model by any other suitable means (e.g., by means of firmware).

Various embodiments of the systems and techniques described herein above may be implemented in a digital electronic circuit system, an integrated circuit system, a field programmable gate array (FPGA), an application specific integrated circuit (ASIC), an application specific standard product (ASSP), a system on chip (SOC), a load programmable logic device (CPLD), computer hardware, firmware, software, and/or combinations thereof. The various embodiments may include being implemented in one or more computer programs executable and/or interpretable on a programmable system including at least one programmable processor. The programmable processor may be a special-purpose or general-purpose programmable processor, and may receive data and instructions from a storage system, at least one input device, and at least one output device, and transmit data and instructions to the storage system, the at least one input device, and the at least one output device.

Program codes for implementing the method of the present invention may be written in one programming language or any combination of more programming languages. The program codes may be provided to a processor or controller of a general purpose computer, a special purpose computer or other programmable data processing apparatus, so that the program codes, when executed by the processor or controller, cause the functions/operations specified in the flowcharts and/or block diagrams to be implemented. The program codes may be completely executed on a machine, partially executed on a machine, partially executed on a machine and partially executed on a remote machine as a separate software package, or completely executed on a remote machine or a server.

In embodiments of the present invention, the machine readable medium may be a tangible medium that may contain or store programs used by a command execution system, apparatus or device or incorporated thereto. The machine-readable medium may be a machine-readable signal medium or a machine-readable storage medium. The machine-readable medium may include, but is not limited to, electric, magnetic, optical, electromagnetic, infrared, or semiconductor systems, apparatuses, devices, or a combination of any of the above. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), a fiber, a portable compact disk read-only memory (CD-ROM), an optical memory, a magnet memory, or any suitable combination of the above.

To provide interaction with a user, the system and technology described herein may be implemented on a computer, the computer including: a display device (for example, a CRT (cathode ray tube) or LCD (liquid crystal display) monitor) for displaying information to the user); and a keyboard and a pointing device (for example, a mouse or a trackball) through which the user can provide input to the computer. Other types of devices may also be used to provide interaction with the user, for example, the feedback provided to the user may be any form of sensory feedback (for example, visual feedback, auditory feedback, or tactile feedback); and may be in any form (including acoustic input, voice input, or tactile input) to receive input from the user.

The system and technology described herein may be implemented on a computing system including back-end components (for example, serving as a data server), or a computing system including middleware components (for example, an application server), or a computing system including front-end components (for example, a user computer having a graphical user interface or a web browser through which the user can interact with the embodiments of the system and technology described herein), or a computing system including any combination of such back-end components, middleware components, or front-end components. The components of the system may be interconnected by any form or medium of digital data communication (for example, a communication network). Examples of the communication network include: a Local Area Network (LAN), a Wide Area Network (WAN), and the Internet.

The computer system may include a client and a server. The client and the server are generally remote from each other and usually interact through a communication network. The relationship between the client and the server is generated by virtue of computer programs running on corresponding computers and having a client-server relationship to each other. The server may be a distributed system server, or a server combined with a blockchain. The server may also be a cloud server, or intelligent cloud computing server or intelligent virtual machine with artificial intelligence technology.

It should be understood that various forms of processes shown above may be used to reorder, add, or delete steps. For example, the steps described in embodiments of the present invention may be performed in parallel, sequentially, or in different orders, as long as the desired results of the technical solution disclosed in embodiments of the present invention can be achieved, no limitation is made herein.

The above specific embodiments do not constitute a limitation on the protection scope of the present invention. Those skilled in the art should understand that various modifications, combinations, sub-combinations and substitutions can be made according to design requirements and other factors. Any modification, equivalent replacement and improvement made within the principle of the present invention shall be included in the protection scope of the present invention.

## Claims

1. A method for identifying a display scene, comprising:
acquiring (201, 301, 401, 501) a feature vector of a to-be-identified image and acquiring a base library feature vector set;
ascertaining (202, 302), from the base library feature vector set, at least two candidate feature vectors based on a similarity coefficient between the feature vector of the to-be-identified image and each feature vector in the base library feature vector set;
performing (203, 505, 605) threshold comparisons on similarity coefficients of the at least two candidate feature vectors, to obtain a target feature vector; and
determining (204, 305, 405, 506, 606) a display scene of the to-be-identified image based on a display scene tag corresponding to the target feature vector.

2. The method according to claim 1, wherein the at least two candidate feature vectors comprise one primary feature vector and at least one secondary feature vector, and the performing (203) the threshold comparisons on the similarity coefficients of the at least two candidate feature vectors to obtain the target feature vector comprises:
in response to determining that a similarity coefficient of the primary feature vector is greater than a first threshold, determining (303, 403) the primary feature vector as the target feature vector; and
in response to determining that the similarity coefficient of the primary feature vector is less than or equal to the first threshold and that a similarity coefficient of any one of the at least one secondary feature vector is greater than a second threshold, ascertaining (304) the target feature vector based on the at least one secondary feature vector,
wherein both the first threshold and the second threshold are numerical values greater than 0 and less than 1, and the second threshold is less than the first threshold.

3. The method according to claim 2, wherein the at least two candidate feature vectors comprise one primary feature vector and two secondary feature vectors, and
the ascertaining (304) the target feature vector based on the at least one secondary feature vector comprises:
in response to determining that display scene tags corresponding to the two secondary feature vectors are consistent, determining (404) any one of the two secondary feature vectors as the target feature vector.

4. The method according to claim 2 or 3, wherein the ascertaining (202, 302), from the base library feature vector set, at least two candidate feature vectors based on the similarity coefficient between the feature vector of the to-be-identified image and each feature vector in the base library feature vector set comprises:
performing (502), respectively, a matrix multiplication between the feature vector of the to-be-identified image and the each feature vector in the base library feature vector set, to obtain a distance feature vector set;
calculating (503) a similarity coefficient of the each feature vector in the base library feature vector set based on the distance feature vector set; and
ascertaining (504), from the base library feature vector set, the at least two candidate feature vectors based on the similarity coefficient.

5. The method according to claim 4, wherein the similarity coefficient of the primary feature vector is greater than a similarity coefficient of any feature vector in the at least one secondary feature vector.

6. The method according to any one of claims 1-5, wherein the acquiring (201, 301, 401, 501) the feature vector of the to-be-identified image comprises:
extracting (601) a target area from the to-be-identified image through a pre-trained position identification model, to obtain a to-be-processed target area image; and
inputting (602) the to-be-processed target area image into a pre-trained feature extraction model, to obtain the feature vector of the to-be-identified image.

7. A method for training a model, comprising:
collecting (701) a set of image samples of display scenes;
performing (702) target area extraction on each image sample in the set of image samples, to obtain a set of target area samples; and
using (703) the set of target area samples as training samples to train a first initial model, to obtain a feature extraction model.

8. The method according to claim 7, further comprising:
annotating (801) a target area on each image sample in the set of image samples, to obtain target area coordinate information corresponding to the each image sample;
using (802) the set of image samples and corresponding target area coordinate information as training samples to train a second initial model, to obtain a position identification model.

9. The method according to claim 7 or 8, further comprising:
during the training of the first initial model, obtaining (901) feature vectors of target area samples in the set of target area samples as a base library feature vector set;
annotating (902) a display scene on the each target area sample, to obtain a display scene tag corresponding to the each target area sample; and
saving (903) the base library feature vector set and corresponding display scene tags.

10. An apparatus for identifying a display scene, comprising means for carrying out the method according to any one of claims 1-9.

11. A non-transitory computer readable storage medium, storing a computer instruction, wherein the computer instruction, when performed by a computer, causes the computer to perform the method according to any one of claims 1-9.

12. A computer program product, comprising a computer program, wherein the computer program, when executed by a processor, causes the processor to implement the method according to any one of claims 1-9.
